# EUROPÄISCHE PATENTSCHRIFT

(11) **EP 3 151 997 B1**
(45) Veröffentlichungstag und Bekanntmachung des Hinweises auf die Patenterteilung: **10.10.2018**
(21) Anmeldenummer: 15729093.3
(22) Anmeldetag: 29.05.2015
(51) Int. Cl.: B23K 26/08, B23K 26/00, B23K 26/36

(54) **VERFAHREN ZUM MARKIEREN EINES DATAMATRIX-CODES AUF EINEM WERKSTÜCK MITTELS EINES LASERSTRAHLS**
METHOD FOR MARKING A WORKPIECE WITH A DATA MATRIX CODE BY MEANS OF A LASER BEAM
PROCÉDÉ DE MARQUAGE D'UN CODE DATAMATRIX SUR UNE PIÈCE USINÉE AU MOYEN D'UN RAYON LASER

(30) Priorität: 04.06.2014 DE 102014210611
(43) Veröffentlichungstag der Anmeldung: 12.04.2017
(73) Patentinhaber: Trumpf Werkzeugmaschinen GmbH + Co. KG, 71254 Ditzingen (DE)
(72) Erfinder: WADEHN, Wolf, 71735 Nussdorf (DE); WEISS, Korbinian, 70193 Stuttgart (DE); ZIMMERMANN, Markus, 70771 Leinfelden-Echterdingen (DE)
(74) Vertreter: Kohler Schmid Möbus Patentanwälte
(86) Internationale Anmeldenummer: PCT/EP2015/061982
(87) Internationale Veröffentlichungsnummer: WO 2015/185454

(56) Entgegenhaltungen:
- WO-A1-01/61619
- DE-A1-102008 028 776

## Beschreibung

Die Erfindung betrifft ein Verfahren zum Markieren eines DataMatrix-Codes (DMC) in Form einer n*m-Zellenmatrix (n, m ≥ 2) aus hellen und dunklen Zellen, welche jeweils aus einer hellen oder dunklen s*t-Pixelmatrix (s, t ≥ 1) bestehen, auf einem Werkstück mittels eines Laserstrahls, wobei eine den Laserstrahl auf das Werkstück richtende Laserbearbeitungseinheit den zu markierenden Werkstückbereich pixelzeilenweise mit jeweils konstanter Markierungsgeschwindigkeit und abwechselnd in entgegengesetzter Richtung abfährt und wobei während des Abfahrens die hellen Pixel und/oder die dunklen Pixel auf dem Werkstück durch zeitweises Einschalten des Laserstrahls markiert werden.

Beim DMC sind die Informationen sehr kompakt in einer quadratischen oder rechteckigen Fläche als Muster von hellen und dunklen Zellen kodiert, wobei jede Zelle durch einen einzigen Pixel oder durch eine Pixelmatrix gebildet ist.

Bei bekannten Markierungsverfahren wird ein DMC auf ein Werkstück aufgebracht, indem eine den Laserstrahl auf das Werkstück richtende Laserbearbeitungseinheit benachbarte Pixelzeilen des DMC nacheinander in jeweils entgegengesetzter Richtung abfährt und dabei die dunklen Pixel auf der helleren Werkstückoberfläche durch zeitweises Einschalten des Laserstrahls markiert werden. Beim Übergang von einer Zeile auf die unmittelbar benachbarte nächste Pixelzeile muss die Laserbearbeitungseinheit für die Umkehr ihrer Bewegungsrichtung bis fast zum Stillstand abgebremst und dann wieder auf die Markierungsgeschwindigkeit beschleunigt werden. Diese meist nicht ruckfreien Abbrems- und Beschleunigungsvorgänge bei jedem Zeilenwechsel kosten Zeit und führen insgesamt zu einer Verlängerung der Markierungsdauer des DMC.

Der Oberbegriff von Anspruch 1 basiert auf der WO 01/61619 A1 und offenbart ein Verfahren zum Markieren eines DataMatrix-Codes (DMC). Aus der DE 10 2008 028776 A1 ist eine Vorrichtung bekannt, die ein solches Verfahren durchführen kann. Demgegenüber ist es die Aufgabe der Erfindung, bei einem Verfahren der eingangs genannten Art den DMC in kürzerer Zeit auf das Werkstück aufzubringen. Diese Aufgabe wird erfindungsgemäß dadurch gelöst, dass die Laserbearbeitungseinheit von einer bereits abgefahrenen Pixelzeile auf einer schlaufen- oder bogenförmigen Kurve, deren Kurvendurchmesser mindestens den doppelten Pixelzeilenabstand beträgt, zu der als nächstes abzufahrenden Pixelzeile geführt wird. Bevorzugt beträgt der Kurvendurchmesser mindestens das 5-fache, besonders bevorzugt mindestens das 10-fache, des Pixelzeilenabstands.

Der erfindungsgemäß große Kurvendurchmesser von mindestens dem doppelten Pixelzeilenabstand ermöglicht es der Laserbearbeitungseinheit, beim Zeilenübergang eine hohe Geschwindigkeit beizubehalten und dadurch die Zeit eines Zeilenwechsels zu minimieren. Bei einer pixelzeilenweisen Abarbeitung mit direkt aufeinander folgenden Pixelzeilen erfolgt der Zeilenübergang zwischen zwei Pixelzeilen über eine schlaufenförmige Kurve, die - im Vergleich zu einem schlaufenlosen Zeilenübergang zwischen zwei direkt benachbarten Pixelzeilen - zwar einen längeren Weg darstellt, aber mit deutlich höherer Geschwindigkeit und ruckfrei abgefahren werden kann, was insgesamt in einer kürzeren Markierungsdauer resultiert. Bei einer pixelzeilenweisen Abarbeitung mit nicht direkt aufeinander folgenden Pixelzeilen erfolgt der Zeilenübergang zwischen zwei Pixelzeilen über eine bogenförmige, insbesondere halbkreisförmige Kurve, die - im Vergleich zu einem Zeilenübergang zwischen zwei direkt benachbarten Pixelzeilen - zwar einen längeren Weg darstellt, aber mit deutlich höherer Geschwindigkeit und ruckfrei abgefahren werden kann, was insgesamt in einer kürzeren Markierungsdauer resultiert.

Bevorzugt wird die Laserbearbeitungseinheit von einer bereits abgefahrenen Pixelzeile auf einer halbkreisförmigen Kurve zu der als nächstes abzufahrenden Pixelzeile der Zellenmatrix geführt.

Vorzugsweise beträgt die Kurvengeschwindigkeit der Laserbearbeitungseinheit entlang der Kurve mindestens 50%, bevorzugt mindestens 90%, der konstanten Markierungsgeschwindigkeit.

Insbesondere bei einem bogen- oder kreisbogenförmigen Zeilenübergang fährt die Laserbearbeitungseinheit die Pixelzeilen der Zellenmatrix bevorzugt jeweils zeilenpaarweise in entgegengesetzter Richtung ab, wobei die beiden Zeilen jedes der Zeilenpaare jeweils um mehr als einen Zeilenabstand, insbesondere um immer den gleichen Zeilenabstand, voneinander entfernt sind. Besonders vorteilhaft ist es, wenn sich in Spaltenrichtung die ersten Zeilen der Zeilenpaare jeweils aneinander anschließen und/oder die zweiten Zeilen der Zeilenpaare jeweils aneinander anschließen. Der Markiervorgang wird beispielsweise in der obersten Pixelzeile des DMC begonnen, und dann wird ein Halbkreis zu einer mittleren Pixelzeile gefahren, die in entgegengesetzter Richtung abgefahren wird. Anschließend wird ein Halbkreis zurück zu der zweitobersten Pixelzeile gefahren, von der über einen Halbkreis zu der nächsttieferen mittleren Pixelzeile gefahren wird. Diese rotierende Abarbeitungsstrategie setzt sich fort bis zur letzten Pixelreihe des DMC.

Die Pixel können auf dem Werkstück jeweils als Punkt oder als Linie markiert werden, wobei ein runder Pixelpunkt aufgrund seiner besseren Prozessstabilität im Hinblick auf Materialtoleranz und Oberflächenqualität einer Pixellinie vorzuziehen ist.

Das erfindungsgemäße Markierungsverfahren kann mit Strahlquellen in verschiedensten Leistungsklassen und allen gängigen Wellenlängen, z.B. mit Festkörperlasern (Wellenlängen von z.B. 0,5 µm bis 1 µm) oder mit CO2-Lasern (Wellenlängen 10,6 µm), umgesetzt werden.

Die Erfindung betrifft in einem weiteren Aspekt auch eine Lasermarkierungsmaschine ("Beschriftungslaser") mit einem Laserstrahlerzeuger, mit einer in X- und Y-Richtung verfahr- und/oder verschwenkbaren Laserbearbeitungseinheit, die den Laserstrahl auf ein Werkstück richtet, und mit einer Maschinensteuerung, die programmiert ist, die Bewegung der Laserbearbeitungseinheit gemäß dem erfindungsgemäßen Verfahren zu steuern.

Die Erfindung betrifft schließlich auch ein Computerprogrammprodukt, welches Codemittel aufweist, die zum Durchführen aller Schritte des erfindungsgemäßen Markierungsverfahrens angepasst sind, wenn das Programm auf einer Maschinensteuerung einer Lasermarkierungsmaschine abläuft.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen zum Durchführen des erfindungsgemäßen Markierungsverfahrens geeigneten Beschriftungslaser;
- Fig. 2: einen Datamatrix-Code am Beispiel einer 22*22-Zellenmatrix aus hellen und dunklen Pixeln;
- Fign. 3a-3f: die einzelnen Verfahrensschritte eines ersten erfindungsgemäßen Markierungsverfahrens zum Aufbringen eines Datamatrix-Codes auf ein Werkstück;
- Fign. 4a-4d: die einzelnen Verfahrensschritte eines zweiten erfindungsgemäßen Markierungsverfahrens zum Aufbringen eines Datamatrix-Codes auf ein Werkstück; und
- Fign. 5a, 5b: einen Datamatrix-Code bestehend aus Pixelpunkten (Fig. 5a) und aus Pixellinien (Fig. 5b).

In der folgenden Figurenbeschreibung werden für gleiche bzw. funktionsgleiche Bauteile identische Bezugszeichen verwendet.

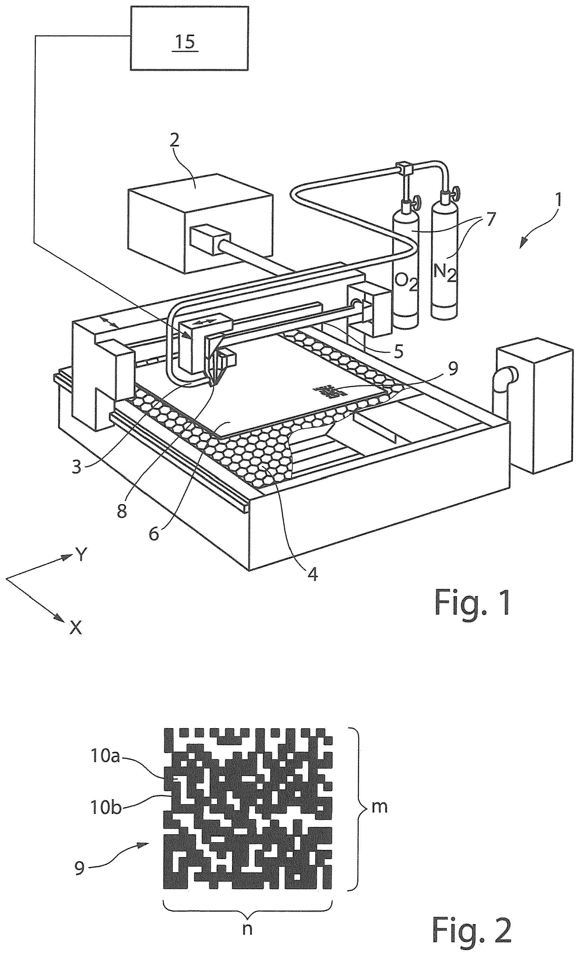

Der in Fig. 1 perspektivisch als Flachbettmaschine dargestellte Beschriftungslaser 1 umfasst einen z.B. als CO2-Laser, Diodenlaser oder Festkörperlaser ausgeführten Laserstrahlerzeuger 2, eine in X- und Y-Richtung verfahrbare Laserbearbeitungseinheit 3 und eine Werkstückauflage 4. Im Laserstrahlerzeuger 2 wird ein Laserstrahl 5 erzeugt, der mittels eines (nicht gezeigten) Lichtleitkabels oder (nicht gezeigter) Umlenkspiegel vom Laserstrahlerzeuger 2 zu der Laserbearbeitungseinheit 3 geführt wird. Der Laserstrahl 5 wird mittels einer in der Laserbearbeitungseinheit 3 angeordneten Fokussieroptik auf ein Werkstück 6 gerichtet, das auf der Werkstückauflage 4 aufliegt. Der Beschriftungslaser 1 wird darüber hinaus mit Prozessgasen 7, beispielsweise Sauerstoff und Stickstoff, versorgt. Das Prozessgas 7 wird einer Prozessgasdüse 8 der Laserbearbeitungseinheit 3 zugeführt, aus der es zusammen mit dem Laserstrahl 5 austritt.

Der Beschriftungslaser 1 dient zum Aufbringen eines zweidimensionalen DataMatrix-Codes (DMC) 9 auf dem Werkstück 6 mittels des Laserstrahls 5. Wie in Fig. 2 gezeigt, ist der DMC 9 beispielsweise eine n*m-Zellenmatrix (n, m = 22) aus hellen und dunklen Zellen, wobei jede Zelle durch einen einzigen hellen oder dunklen Pixel oder durch eine helle oder dunkle s*t-Pixelmatrix (s, t ≥ 1) gebildet sein kann. Im Folgenden wird lediglich der Einfachheit halber angenommen, dass jede Zelle durch einen einzigen Pixel 10a, 10b gebildet ist, also s, t = 1.

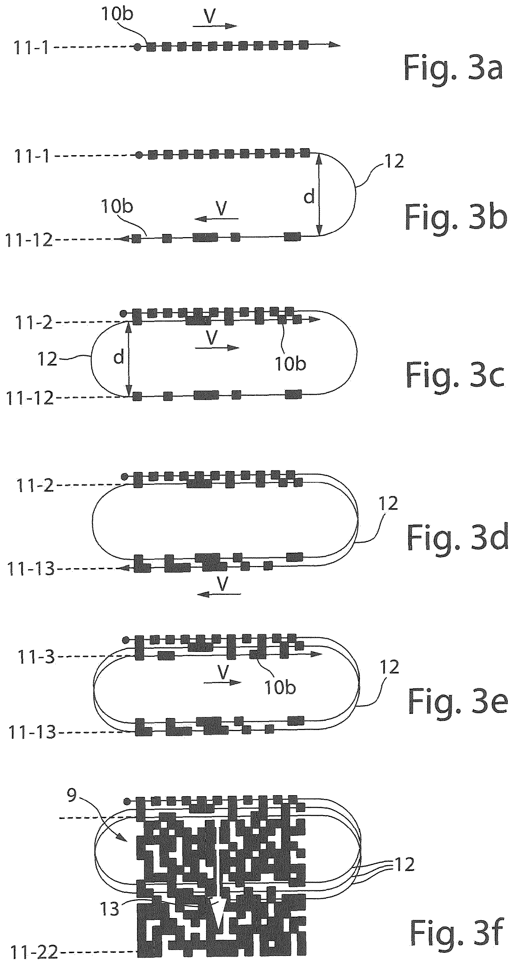

In Fign. 3a bis 3f sind die einzelnen Verfahrensschritte des erfindungsgemäßen Markierungsverfahrens gezeigt, bei dem die Laserbearbeitungseinheit 3 den zu markierenden Werkstückbereich pixelzeilenweise mit jeweils konstanter Markierungsgeschwindigkeit v und abwechselnd in entgegengesetzter Richtung abfährt und während des Abfahrens die dunklen Pixel 10b auf dem Werkstück 6 durch zeitweises Einschalten des Laserstrahls 5 markiert werden.

Der Markiervorgang wird begonnen, indem die Laserbearbeitungseinheit 3 die oberste, 1.te Pixelzeile 11-1 des DMC 9 mit konstanter Markierungsgeschwindigkeit v abfährt und dabei die dunklen Pixel 10b auf dem Werkstück 6 durch zeitweises Einschalten des Laserstrahls 5 markiert werden (Fig. 3a).
Danach wird eine halbkreisförmige Kurve 12 zu der 12.ten Pixelzeile 11-12 des DMC 9 gefahren, so dass der Kurvendurchmesser d elf Pixelzeilenabstände beträgt. Die 12.te Pixelzeile 11-12 wird in entgegengesetzter Richtung wie die 1.te Pixelzeile 11-1 mit der konstanten Markierungsgeschwindigkeit v abgefahren, und dabei werden die dunklen Pixel 10b auf dem Werkstück 6 durch zeitweises Einschalten des Laserstrahls 5 markiert (Fig. 3b).
Danach wird eine halbkreisförmige Kurve 12 zurück zu der 2.ten Pixelzeile 11-2 des DMC 9 gefahren, so dass der Kurvendurchmesser d nun zehn Pixelzeilenabstände beträgt. Die 2.te Pixelzeile 11-2 wird in gleicher Richtung wie die 1.te Pixelzeile 11-1 mit der konstanten Markierungsgeschwindigkeit abgefahren, und dabei werden die dunklen Pixel 10b auf dem Werkstück 6 durch zeitweises Einschalten des Laserstrahls 5 markiert (Fig. 3c).
Danach wird eine halbkreisförmige Kurve 12 zu der 13.ten Pixelzeile 11-13 des DMC 9 gefahren, so dass der Kurvendurchmesser d elf Pixelzeilenabstände beträgt. Die 13.te Pixelzeile 11-13 wird in gleicher Richtung wie die 12.te Pixelzeile 11-12 mit der konstanten Markierungsgeschwindigkeit v abgefahren, und dabei werden die dunklen Pixel 10b auf dem Werkstück 6 durch zeitweises Einschalten des Laserstrahls 5 markiert (Fig. 3d).
Danach wird eine halbkreisförmige Kurve 12 zurück zu der 3.ten Pixelzeile 11-3 des DMC 9 gefahren, so dass der Kurvendurchmesser d zehn Pixelzeilenabstände beträgt. Die 3.te Pixelzeile 11-3 wird in gleicher Richtung wie die 1.te Pixelzeile 11-1 mit der konstanten Markierungsgeschwindigkeit v abgefahren, und dabei werden die dunklen Pixel 10b auf dem Werkstück 6 durch zeitweises Einschalten des Laserstrahls 5 markiert (Fig. 3e).
Diese rotierende Abarbeitungsstrategie setzt sich nach unten in Spaltenrichtung 13 fort, bis schließlich auch die letzte, also die unterste 22.te Pixelreihe 11-22 des DMC 9 markiert ist (Fig. 3f).

Die Kurvengeschwindigkeit der Laserbearbeitungseinheit 3 entlang der halbkreisförmigen Kurven 12 ist jedenfalls so hoch, so dass - im Vergleich zu engen Zeilenübergängen zwischen zwei direkt benachbarten Pixelzeilen - trotz der längeren Kurvenwege die Markierungsdauer deutlich verkürzt ist. Die Kurvengeschwindigkeit kann beispielsweise mindestens 50% der konstanten Markierungsgeschwindigkeit v betragen. Der "überspringende Zeilenwechsel" bzw. der Kurvendurchmesser braucht nicht unbedingt so groß zu sein, dass von der ersten Pixelzeile zur mittleren Pixelzeile des DMC 9 gesprungen wird, sondern muss nur ausreichend groß sein, um eine hohe Kurvengeschwindigkeit der Laserbearbeitungseinheit 3 beizubehalten.

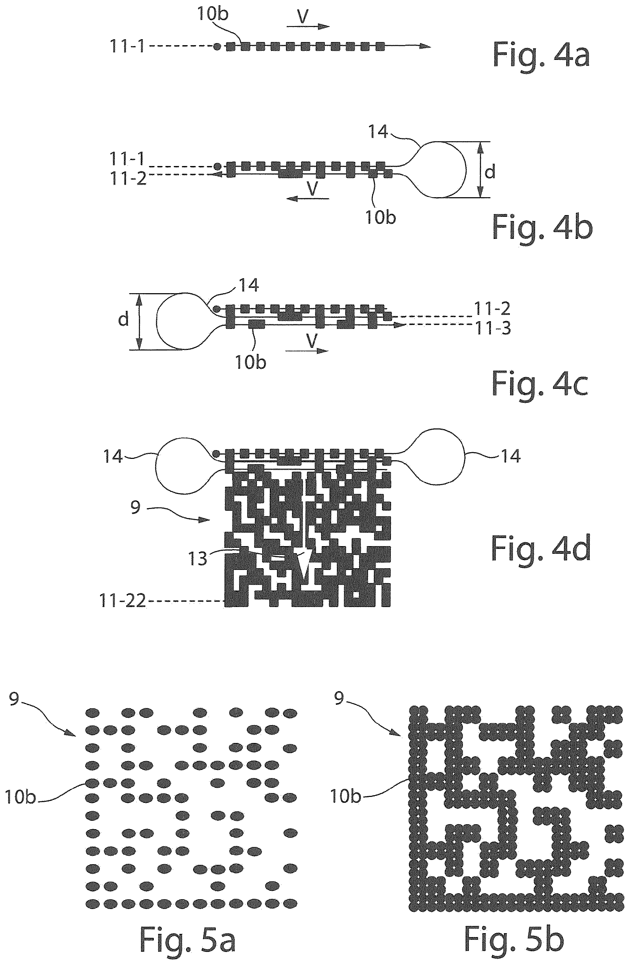

In Fign. 4a bis 4d sind die einzelnen Verfahrensschritte eines gegenüber Fig. 3 modifizierten erfindungsgemäßen Markierungsverfahrens gezeigt, bei dem die Laserbearbeitungseinheit 3 den zu markierenden Werkstückbereich pixelzeilenweise mit jeweils konstanter Markierungsgeschwindigkeit v und abwechselnd in entgegengesetzter Richtung abfährt und während des Abfahrens die dunklen Pixel 10b auf dem Werkstück 6 durch zeitweises Einschalten des Laserstrahls 5 markiert werden.

Der Markiervorgang wird begonnen, indem die Laserbearbeitungseinheit 3 die oberste, 1.te Pixelzeile 11-1 des DMC 9 mit konstanter Markierungsgeschwindigkeit v abfährt und dabei die dunklen Pixel 10b auf dem Werkstück 6 durch zeitweises Einschalten des Laserstrahls 5 markiert werden (Fig. 4a).
Danach wird eine schlaufenförmige Kurve 14 zu der 2.ten Pixelzeile 11-2 des DMC 9 gefahren, wobei der Kurvendurchmesser d ca. zehn Pixelzeilenabstände beträgt. Die 2.te Pixelzeile 11-2 wird in entgegengesetzter Richtung wie die 1.te Pixelzeile 11-1 mit der konstanten Markierungsgeschwindigkeit v abgefahren, und dabei werden die dunklen Pixel 10b auf dem Werkstück 6 durch zeitweises Einschalten des Laserstrahls 5 markiert (Fig. 4b).
Danach wird die gleiche schlaufenförmige Kurve 14 mit dem gleichen Kurvendurchmesser d zu der 3.ten Pixelzeile 11-3 des DMC 9 gefahren. Die 3.te Pixelzeile 11-3 wird in gleicher Richtung wie die 1.te Pixelzeile 11-1 mit der konstanten Markierungsgeschwindigkeit v abgefahren, und dabei werden die dunklen Pixel 10b auf dem Werkstück 6 durch zeitweises Einschalten des Laserstrahls 5 markiert (Fig. 4c).
Diese pendelnde Abarbeitungsstrategie setzt sich nach unten in Spaltenrichtung 13 fort, bis schließlich auch die letzte, also die unterste 22.te Pixelreihe 11-22 des DMC 9 markiert ist (Fig. 4d).

Die Kurvengeschwindigkeit der Laserbearbeitungseinheit 3 entlang der schlaufenkreisförmigen Kurven 14 ist jedenfalls so hoch, dass - im Vergleich zu schlaufenlosen Zeilenübergängen zwischen zwei direkt benachbarten Pixelzeilen - trotz der längeren Kurvenwege die Markierungsdauer deutlich verkürzt ist. Der "schlaufenförmige Zeilenwechsel" ist auch zwischen zwei nicht direkt benachbarten Pixelzeilen möglich, um so einen Kurvendurchmesser größer als der Zeilenabstand zu fahren.

Fig. 5a zeigt einen Datamatrix-Code in Form einer 12*12-Zellenmatrix 9, deren dunkle Zellen jeweils durch eine gepulste Lasermarkierung mit je einem Laserpuls als rundem Pixel 10b gebildet sind. Fig. 5b zeigt ebenfalls eine 12*12-Zellenmatrix 9, deren dunkle Zellen jeweils durch eine gepulste Lasermarkierung mit mehreren in einer Zeile nebeneinanderliegenden Laserpulsen als Pixellinien 10b gebildet sind.

Wie in Fig. 1 gezeigt, umfasst die Laserbearbeitungsmaschine 1 ferner eine Maschinensteuerung 15, die programmiert ist, die Verfahrbewegung der Laserbearbeitungseinheit 3 gemäß den oben beschriebenen Markierungsverfahren zu steuern.

Statt, wie in Fig. 1 gezeigt, in X- und Y-Richtung verfahrbar, kann die Laserbearbeitungseinheit 3 auch in X- und Y-Richtung verschwenkbar ausgebildet sein, beispielsweise mittels einer Scanneroptik, die den Laserstrahl 5 in X- und Y-Richtung ablenkt.

## Patentansprüche

1. Verfahren zum Markieren eines DataMatrix-Codes in Form einer n*m-Zellenmatrix (9) aus hellen und dunklen Zellen, welche jeweils aus einer hellen oder dunklen s*t-Pixelmatrix bestehen, auf einem Werkstück (6) mittels eines Laserstrahls (5), wobei eine den Laserstrahl (5) auf das Werkstück (6) richtende Laserbearbeitungseinheit (3) den zu markierenden Werkstückbereich pixelzeilenweise mit jeweils konstanter Markierungsgeschwindigkeit (v) und abwechselnd in entgegengesetzter Richtung abfährt und wobei während des Abfahrens die hellen Pixel (10a) und/oder die dunklen Pixel (10b) auf dem Werkstück (6) durch zeitweises Einschalten des Laserstrahls (5) markiert werden,
**dadurch gekennzeichnet,**
**dass** die Laserbearbeitungseinheit (3) von einer bereits abgefahrenen Pixelzeile auf einer bogen- oder schlaufenförmigen Kurve (12, 14), deren Kurvendurchmesser (d) mindestens den doppelten Pixelzeilenabstand beträgt, zu der als nächstes abzufahrenden Pixelzeile geführt wird.

2. Verfahren nach Anspruch 1, **dadurch gekennzeichnet, dass** die Laserbearbeitungseinheit (3) von einer bereits abgefahrenen Pixelzeile auf einer halbkreisförmigen Kurve (12) zu der als nächstes abzufahrenden Pixelzeile der Zellenmatrix (9) geführt wird.

3. Verfahren nach Anspruch 1 oder 2, **dadurch gekennzeichnet, dass** die Kurvengeschwindigkeit der Laserbearbeitungseinheit (3) entlang der Kurve (12, 14) mindestens 50%, bevorzugt mindestens 90%, der konstanten Markierungsgeschwindigkeit (v) beträgt.

4. Verfahren nach einem der vorhergehenden Ansprüche, **dadurch gekennzeichnet, dass** die Laserbearbeitungseinheit (3) von einer bereits abgefahrenen Pixelzeile zu einer um mehr als einen Pixelzeilenabstand entfernten Pixelzeile der Zellenmatrix (9) bewegt wird.

5. Verfahren nach einem der vorhergehenden Ansprüche, **dadurch gekennzeichnet, dass** die Laserbearbeitungseinheit (3) die Pixelzeilen der Zellenmatrix (9) jeweils zeilenpaarweise in entgegengesetzter Richtung abfährt, wobei die beiden Zeilen jedes der Zeilenpaare jeweils um mehr als einen Zeilenabstand, bevorzugt um immer den gleichen Zeilenabstand, voneinander entfernt sind.

6. Verfahren nach Anspruch 5, **dadurch gekennzeichnet, dass** in Spaltenrichtung (13) die ersten Zeilen der Zeilenpaare jeweils aneinander anschließen und/oder die zweiten Zeilen der Zeilenpaare jeweils aneinander anschließen.

7. Verfahren nach einem der vorhergehenden Ansprüche, **dadurch gekennzeichnet, dass** die Pixel (10a, 10b) auf dem Werkstück (6) jeweils als Punkt oder als Linie markiert werden.

8. Lasermarkierungsmaschine (1) mit einem Laserstrahlerzeuger (2), mit einer in X- und Y-Richtung verfahr- und/oder verschwenkbaren Laserbearbeitungseinheit (3), die den Laserstrahl (5) auf ein Werkstück (6) richtet, und mit einer Maschinensteuerung (15), die programmiert ist, die Bewegung der Laserbearbeitungseinheit (3) gemäß dem Verfahren nach einem der vorhergehenden Ansprüche zu steuern.

9. Computerprogrammprodukt, welches Codemittel aufweist, die zum Durchführen aller Schritte des Verfahrens nach einem der Ansprüche 1 bis 7 angepasst sind, wenn das Programm auf einer Maschinensteuerung (15) einer Lasermarkierungsmaschine (1) abläuft.

## Claims

1. A method for marking a data matrix code in the form of an n*m cell matrix (9) of light and dark cells, which respectively consist of a light or dark s*t pixel matrix, on a workpiece (6) by means of a laser beam (5), wherein a laser processing unit (3) directing the laser beam (5) onto the workpiece (6) scans, pixel row by pixel row, the workpiece region to be marked, respectively at a constant marking speed (v) and alternately in opposite directions, and wherein the light pixels (10a) and/or the dark pixels (10b) are marked on the workpiece (6) during the scan by temporarily switching on the laser beam (5),
**characterized in that**
the laser processing unit (3) is guided from an already scanned pixel row on an arc- or loop-shaped curve (12, 14), the curved diameter (d) of which is at least two times the pixel row spacing, to the next pixel row to be scanned.

2. The method as claimed in claim 1, **characterized in that** the laser processing unit (3) is guided from an already scanned pixel row on a semicircular curve (12) to the next pixel row of the cell matrix (9) to be scanned.

3. The method as claimed in claim 1 or 2, **characterized in that** the curve speed of the laser processing unit (3) along the curve (12, 14) is at least 50%, preferably at least 90%, of the constant marking speed (v).

4. The method as claimed in one of the preceding claims, **characterized in that** the laser processing unit (3) is moved from an already scanned pixel row to a pixel row of the cell matrix (9) lying more than one pixel row spacing away.

5. The method as claimed in one of the preceding claims, **characterized in that** the laser processing unit (3) respectively scans the pixel rows of the cell matrix (9) in row pairs in opposite directions, the two rows of each of the row pairs respectively being separated from one another by more than one row spacing, preferably always by the same row spacing.

6. The method as claimed in claim 5, **characterized in that**, in the column direction (13), the first rows of the row pairs respectively follow one another and/or the second rows of the row pairs respectively follow one another.

7. The method as claimed in one of the preceding claims, **characterized in that** the pixels (10a, 10b) are respectively marked as a point or as a line on the workpiece (6).

8. A laser marking machine (1) comprising a laser beam generator (2), a laser processing unit (3) which can be displaced in the X and Y directions and/or pivoted and directs the laser beam (5) onto a workpiece (6), and a machine controller (15) which is programmed to control the movement of the laser processing unit (3) according to the method as claimed in one of the preceding claims.

9. A computer program product which comprises code means that are adapted to carry out all steps of the method as claimed in one of claims 1 to 7 when the program is run on a machine controller (15) of a laser marking machine (1).

## Revendications

1. Procédé de marquage d'un code DataMatrix sous la forme d'une matrice de n*m cellules (9) composée de cellules claires et foncées, lesquelles sont constituées chacune d'une matrice de s*t pixels clairs ou foncés, sur une pièce (6) au moyen d'un faisceau laser (5), dans lequel une unité d'usinage au laser (3) qui dirige le faisceau laser (5) sur la pièce (6) parcourt la zone de la pièce à marquer pixel par pixel à une vitesse de marquage constante (v) et en alternance dans des sens opposés, et dans lequel, pendant le parcours, les pixels clairs (10a) et/ou les pixels foncés (10b) sont marqués sur la pièce (6) par activation temporaire du faisceau laser (5),
**caractérisé en ce**
**que** l'unité d'usinage au laser (3) est guidée d'une ligne de pixels déjà parcourue vers la ligne de pixels suivante à parcourir sur une courbe en forme d'arc ou de boucle (12, 14) dont le diamètre de courbe (d) est au moins le double de la distance entre lignes de pixels.

2. Procédé selon la revendication 1, **caractérisé en ce que** l'unité d'usinage au laser (3) est guidée d'une ligne de pixels déjà parcourue vers la ligne de pixels suivante à parcourir de la matrice de cellules (9) sur une courbe semi-circulaire (12).

3. Procédé selon la revendication 1 ou 2, **caractérisé en ce que** la vitesse en courbe de l'unité d'usinage au laser (3) le long de la courbe (12, 14) est d'au moins 50 %, de préférence d'au moins 90 %, de la vitesse de marquage constante (v).

4. Procédé selon l'une des revendications précédentes, **caractérisé en ce que** l'unité d'usinage au laser (3) est déplacée d'une ligne de pixels déjà parcourue vers une ligne de pixels de la matrice de cellules (9) espacée de plus d'une distance entre lignes de pixels.

5. Procédé selon l'une des revendications précédentes, **caractérisé en ce que** l'unité d'usinage au laser (3) parcourt les lignes de pixels de la matrice de cellules (9) chaque fois par paire de lignes dans des sens opposés, les deux lignes de chacune des paires de lignes étant chaque fois espacées l'une de l'autre de plus d'une distance entre lignes, de préférence de toujours la même distance entre lignes.

6. Procédé selon la revendication 5, **caractérisé en ce que**, dans la direction des colonnes (13), les premières lignes des paires de lignes se raccordent chaque fois les unes aux autres et/ou les deuxièmes lignes des paires de lignes se raccordent chaque fois les unes aux autres.

7. Procédé selon l'une des revendications précédentes, **caractérisé en ce que** les pixels (10a, 10b) sur la pièce (6) sont marqués chacun sous la forme d'un point ou d'une ligne.

8. Machine de marquage au laser (1) avec un générateur de faisceau laser (2), avec une unité d'usinage au laser (3) pouvant être déplacée et/ou pivotée dans les directions X et Y, qui dirige le faisceau laser (5) sur une pièce (6), et avec une commande de machine (15) qui est programmée pour commander le déplacement de l'unité d'usinage au laser (3) conformément au procédé selon l'une des exigences précédentes.

9. Produit programme d'ordinateur qui présente des moyens de code adaptés à mettre en oeuvre toutes les étapes du procédé selon l'une des revendications 1 à 7 lorsque le programme est exécuté sur une commande de machine (15) d'une machine de marquage au laser (1).
